# EUROPEAN PATENT SPECIFICATION

(11) **EP 2 314 146 B1**
(45) Date of publication and mention of the grant of the patent: **10.10.2012**
(21) Application number: 10188652.1
(22) Date of filing: 25.10.2010
(51) Int. Cl.: A01D 34/82, A01D 34/90, A01D 75/20

(54) **Structure for preventing falling-down of cutter blade shaft of bush cutter**
Struktur zur Vermeidung des Herunterfallens der Messerklinge eines Buschschneiders
Structure pour prévenir la chute de la tige de la lame coupante d'un coupeur de buissons

(30) Priority: 26.10.2009 JP 2009245073
(43) Date of publication of application: 27.04.2011
(73) Proprietor: Honda Motor Co., Ltd., Tokyo 107-8556 (JP); Nikkari Co., Ltd., Okayama-shi Okayama 703-8228 (JP)
(72) Inventor: Miyahara, Kazuyoshi, Saitama 351-0193 (JP); Tsutsui, Yoshinobu, Okayama 704-8125 (JP); Matsuura, Takuji, Okayama 704-8125 (JP)
(74) Representative: Prechtel, Jörg

(56) References cited:
- JP-A- 2005 237 265
- JP-A- 2009 296 936
- US-A- 3 781 991
- US-A- 5 103 561

## Description

The present invention relates to a structure for preventing falling-down of a cutter blade shaft in a bush cutter.

One example of the conventionally-known bush cutters is disclosed in Japanese Utility Model Application Laid-Open Publication No. JP H0717019 U (hereinafter referred to as "patent literature 1"), in which a cutter blade shaft, rotatably mounted in a vertical orientation in a cutter head case via a pair of upper and lower bearings, has a lower end portion exposed out of the head case and a disk-shaped cutter blade is mounted on the lower end portion of the cutter blade shaft. Further, in the bush cutter disclosed in patent literature 1, a transmission cylinder (or operating rod) has one end portion extending obliquely into the head case, and a transmission shaft, driven by an engine or motor provided on another end portion of the transmission cylinder, is passed through the transmission cylinder, so that driving power of the transmission shaft is transmitted to the cutter blade via driving and driven bevel gears. In this disclosed bush cutter, the cutter blade having the upper bearing and the driven bevel gear assembled thereto in advance is inserted into the head case from below the head case, after which the lower bearing is inserted into the head case and fixed at its outer race to the head case by means of a snap ring. Alternatively, the cutter blade having both of the upper and lower bearings and the driven bevel gear assembled thereto in advance may be inserted into and fixed to the head case.

With the bush cutter disclosed in patent literature 1, prevention of falling-down of the cutter blade shaft relies on the snap ring. However, soil, sand and grass chips may enter a region near the lower bearing, and thus, if the bush cutter continues to be used in such a condition, the lower bearing may be damaged, cause separation between inner and outer races, and the head case may become worn to the extent that even a groove having the snap ring fitted therein is scraped. As a consequence, the cutter blade shaft may undesirably pull out of the upper bearing and driven bevel gear and fall downward, because the driven bevel gear is disposed on an upper surface portion of the driving bevel gear and thus is not movable downward.

To avoid such an inconvenience, a bush cutter disclosed in Japanese Patent Application Laid-Open Publication No. 2005-237265 (hereinafter referred to as "patent literature 2") includes, in addition to the abovementioned snap ring, an extra or backup snap ring that fastens the cutter blade shaft at a position immediately above an inner race of the upper bearing, in order to achieve a secondary falling-down preventing means. However, only small fitting margins are provided for the snap rings in the bush cutter disclosed in patent literature 2, and thus, if a relatively great load is applied to the cutter blade shaft in an obliquely hanging posture, the snap rings may undesirably come off so that the cutter blade shaft falls downward. Further, with such arrangements, the cutter blade shaft is not movable downward relative to the upper bearing etc., adjustment required at the time of assembly tends to be difficult. In view of such prior art inconveniences, Japanese Patent Application Laid-Open Publication No. 2009-296936 proposes a technique in accordance with which a bolt having a head of a greater diameter than a bearing hole of the head case is screwed into an upper end portion of the cutter blade shaft, so that the bolt is stopped and retained by a portion of the head case when the cutter blade shaft has pulled out of the upper bearing to fall downward.

US 5 103 561 A discloses a bush cutter in accordance with the preamble of claim 1.

In view of the foregoing prior art problems, it is an object of the present invention to provide an improved falling-down preventing structure for a cutter blade shaft of a bush cutter which can reliably prevent the cutter blade shaft from falling downward out of a cutter head case without requiring a considerable increase in the number of necessary component parts.

In order to accomplish the above-mentioned object, the present invention provides a bush cutter in accordance with claim 1.

In case the cutter blade shaft has pulled out of the driven bevel gear due to accidental detachment of a retaining ring (e.g., snap ring) or damage of the lower bearing, the cutter blade shaft falling downward can be caught by the falling-down preventing pin and thus can be prevented from further falling down. Because the falling-down preventing pin, which is not connected to the cutter blade shaft, does not rotate at all, it does not present any safety problem.

Preferably, the falling-down preventing structure of the present invention further comprises an increased-diameter portion provided on the cutter blade shaft above the recessed portion, and the driven bevel gear is fitted with a portion of the cutter blade shaft above the increased-diameter portion by spline fitting engagement. Further, a distance between the lower surface of the increased-diameter portion of the cutter blade shaft and the upper surface of the falling-down preventing pin is set greater than the length of the spline fitting engagement between the cutter blade shaft and the driven bevel gear. When the cutter blade shaft has fallen downward, it is disconnected from the spline fitting engagement with the driven bevel gear (because the driven bevel gear is still held in place riding on the driving bevel gear); namely, the cutter blade shaft is disconnected from the rotating force of the driven bevel gear. Thus, the cutter blade shaft can be reliably prevented from continuing to rotate to thereby break or damage the pin and from completely falling down out of the head case.

Preferably, the spline formed on the cutter blade shaft extends to the increased-diameter portion. Thus, when the cutter blade shaft has fallen downward, a concave and convex of the spline, formed on the lower surface of the increased-diameter portion, would produce great rasping sound as the cutter blade shaft rotates through inertia, so that a human operator of the bush cutter can promptly know that the shaft has fallen downward

Preferably, the falling-down preventing pin has one end portion inserted in one wall portion of the head case and another end portion screwed to another wall portion of the head case. This arrangement can reduce projecting portions from the head case and achieves a superior aesthetic design.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a vertical sectional view illustrating a cutter head case of a bush cutter employing a falling-down preventing structure for a cutter blade shaft, according to an embodiment of the present invention;
Fig. 2 is a cross-sectional view of the cutter head case shown in Fig. 1;
Fig. 3 is an enlarged vertical sectional view of a section of the cutter blade shaft having a recessed portion formed therein; and
Fig. 4 is an enlarged cross-sectional view of the section of the cutter blade shaft.

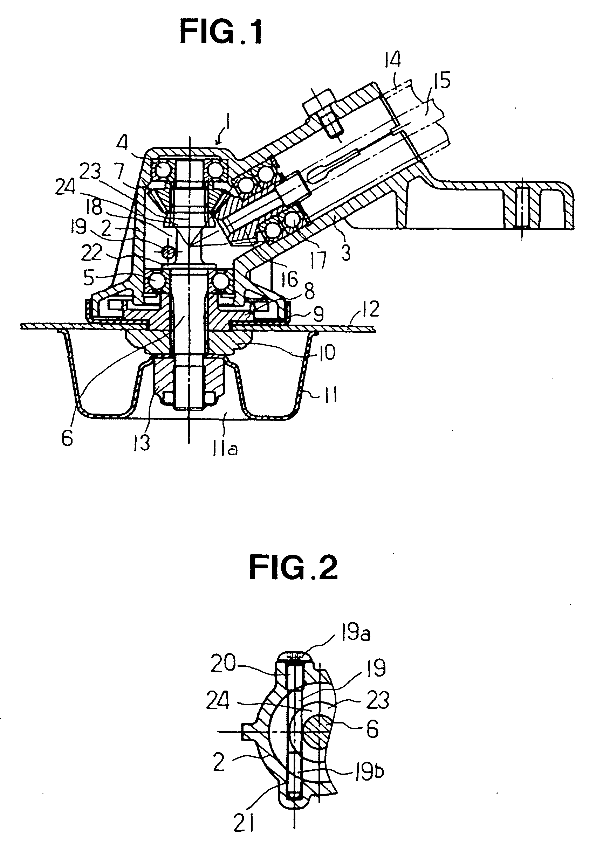

Reference is now made to Fig. 1 showing in vertical section a cutter head case of a bush cutter employing a falling-down preventing structure for a cutter blade shaft according to an embodiment of the present invention. The head case 1 is integrally formed by die-casting or otherwise, and it integrally includes a body section 2 and a connection section 3 obliquely connecting to a side surface of the body section 2 from above. Upper and lower bearings 4 and 5 are fitted in the interior of the body section 2, and a cutter blade shaft 6 is vertically passed through the upper and lower bearings 4 and 5 so that it is rotatably supported in a vertical orientation inside the head case 1. The cutter blade shaft 6 has radial flange or increased-diameter portions respectively abutted against the lower end surface and upper end surfaces of the upper and lower bearings 4 and 5 in such a manner that the cutter blade shaft 6 can move neither upward or downward relative to the upper and lower bearings 4 and 5.

Further, a driven bevel gear 7 is fitted over a portion of the cutter blade shaft 6 between the upper and lower bearings 4 and 5. An upper retaining ring 8 having a portion located inside the head case 1 is fixedly fitted over a lower portion of the shaft 6 by spline engagement or the like, and a lower retaining ring 10 is provided under the upper retaining ring 8 and fixedly fitted over a lower end portion of the cutter blade shaft 6 via a guard ring 9. Furthermore, a bottom cup 11 is provided under the lower retaining ring 10, which includes an upward-dented pocket 11a and an upper-end peripheral flange projecting radially outwardly generally at a height of the guard ring 9. A threaded is formed on a portion of the cutter blade shaft 6 projecting downward into the pocket 11a. A cutter blade 12 is attached to the cutter blade shaft 6 by being tightly sandwiched between the upper and lower retaining rings 8 and 10 via a tightening nut 13.

A transmission cylinder (or operating rod) 14 is inserted in the connection section 2, and a transmission shaft 15 compulsorily drive by a not- shown drive source is passed through the transmission cylinder (operating rod) 14, and a driving bevel gear 16 meshing with the above-mentioned driven bevel gear 7 is supported on a distal end portion of the transmission shaft 15 by means of a bearing 17. Thus, as the transmission shaft 15 is driven, driving power is transmitted to the cutter blade shaft 6 via the driving bevel gear 16 and driven bevel gear 7, so that the cutter blade 12 is rotated to cut bush and grass.

Further, the instant embodiment a recessed portion 18 of a reduced diameter is formed in an intermediate region of the cutter blade shaft 6 between the driven bevel gear 7 and the lower bearing 5, and a falling-down preventing pin 19 extending horizontally across the recessed portion 18, as shown in a cross-sectional view of Fig. 2. More specifically, the falling-down preventing pin 19 includes a head section 19a and a body section 19b, and a threaded portion 20 is provided immediately adjacent to the head section 19a. The threaded portion 20 of the falling-down preventing pin 19 is screwed into one wall portion of the head case's body section 2, so that a distal end portion of the falling-down preventing pin 19 passes through the recessed portion 18 to fit into a hole 21 formed in another wall portion of the head case's body section 2 opposed to the one wall portion. The head section 19a is exposed on the outer surface of the one wall portion, and the distal end of the threaded portion 20 does not project out of the hole 21. To secure a sufficient mechanical strength, the pin 19 has to project into the hole 21 by a considerably great length; accordingly, the other wall portion having the hole 21 formed therein has a considerably increased wall thickness, and thus, the outer surface of the other wall portion bulges outwardly. In the aforementioned manner, the falling-down preventing pin 19 extends across the recessed portion and inserted at its opposite end portions in the head case's body section 2.

As a modification, part of the distal end portion of the falling-down preventing pin 19 may be threaded, and the hole 21 may be formed as a through-hole. In this case, the pin 19 is inserted in such a manner that the threaded part of the distal end portion passes through and projects out of the through-hole 21 to be screwed into a nut. However, the modification is less preferable to the above-described example of Fig. 2 in that the part projecting out of the through-hole 21 has to be relatively great in length. For an increased compactness, it is also preferable that the head section 19a be embedded in a counterbored recess formed in the one wall portion of the head case's body section 2. Note that the pin 19 only passes through the recessed portion 18 and is not in contact with the cutter blade shaft 6. Thus, as long as the cutter blade shaft 6 is in a normal position, it will never contact the falling-down preventing pin 19.

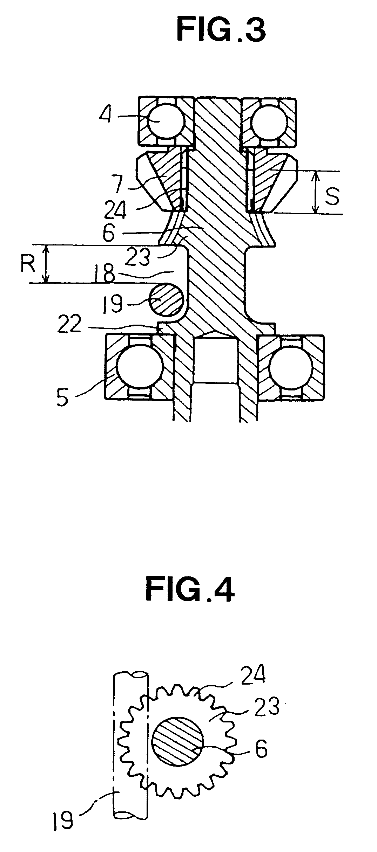

Fig. 3 is an enlarged vertical sectional view of a section of the cutter blade shaft 6 having the recessed portion 18 formed therein, and Fig. 4 is an enlarged cross-sectional view of the section of the cutter blade shaft 6. The lower increased-diameter portion 22 for retaining an inner race of the lower bearing 5 is formed on the cutter blade shaft 6 immediately below the recessed portion 18, and the upper increased-diameter portion 23 for retaining the driven bevel gear 7 is formed on the cutter blade shaft 6 immediately above the recessed portion 18. The driven bevel gear 7 and the cutter blade shaft 6 have to be fixedly fitted with each other. For that purpose, in the illustrated example, involute splines 24 are formed on the driven bevel gear 7 and the cutter blade shaft 6, so that the driven bevel gear 7 and the cutter blade shaft 6 are spline-fitted with each other. In this case, it is preferable that a distance R between the lower surface of the upper increased-diameter portion 23 and the lower surface of the pin 19 be set greater than an axial length S of the spline fitting engagement between the cutter blade shaft 6 and the driven bevel gear 7 (R > S). With the spline 24 formed on the cutter blade shaft 6 by a cutting process, concaves and convexes are formed on the lower surface of the upper increased-diameter portion 23.

In case any of the retaining rings is detached due to detachment of the lower bearing 5 or wear of the head case 2 or the like, the cutter blade shaft 6 would pull out of the upper bearing 4 and driven bevel gear 7 and fall downward. However, the upper increased-diameter portion 23 provided immediately above the recessed portion 18 is caught by the pin 19, so that the cutter blade shaft 6 can be prevented from further falling downward and hence from completely detached from the head case 1. If the distance R between the lower surface of the upper increased-diameter portion 23 and the upper surface of the pin 19 is set greater than the length S of the spline fitting engagement between the cutter blade shaft 6 and the driven bevel gear 7 as noted above, the cutter blade shaft 6 can be detached from the driven bevel gear 7 and hence disconnected from the rotating force of the driven bevel gear 7, because the driven bevel gear 7 is held in place riding on the driving bevel gear 17 even when the upper increased-diameter portion 23 of the cutter blade shaft 6 has fallen onto the pin 19. Thus, the cutter blade shaft 6 can be reliably prevented from continuing to rotate to thereby break or damage the pin 19 and from completely falling down out of the head case 1.

Further, when the cutter blade shaft 16 has fallen downward, the concaves and convexes of the splines 24, formed on the lower surface of the increased-diameter portion 23, would produce great rasping sound as the cutter blade shaft 6 rotates through inertia. Thus, a human operator of the bush cutter can promptly know that the shaft 6 has fallen downward, and can thereby take necessary measures, such as stopping the rotation of the transmission shaft 15.

In a falling-down preventing structure for a cutter blade shaft (6) of a bush cutter, where the cutter blade shaft (6) is rotatably mounted in a vertical orientation in a cutter head case (1) via a pair of upper and lower bearings (4, 5) and where driving force is transmitted from a transmission shaft (15) to the cutter blade shaft (6) via driving and driven bevel gears (16, 7), a recessed portion (18) of a reduced diameter is provided on the cutter blade shaft (6) between the driven bevel gear (7) and the lower bearing (5), and a falling-down preventing pin (19) is inserted at its opposite end portions in the head case in such a manner as to extend across the recessed portion (18).

## Claims

1. A bush cutter in which the cutter blade shaft (6) is rotatably mounted in a vertical orientation in a cutter head case (1) via a pair of upper and lower bearings (4, 5) and in which driving force is transmitted from a transmission shaft (15) to the cutter blade shaft via driving and driven bevel gears (16, 7),
wherein the cutter blade shaft (6) is provided with a falling-down preventing structure comprising a recessed portion (18) of a reduced diameter provided in the cutter blade shaft (6) between the driven bevel gear (7) and the lower bearing (5);
**characterized in that** the falling-down prevention structure further comprises a falling-down preventing pin (19) inserted at opposite end portions thereof in the head case (1) in such a manner as to extend across the recessed portion (18).

2. The bush cutter of claim 1, wherein the falling-down preventing structure further comprises an increased-diameter portion (23) provided on the cutter blade shaft above the recessed portion (18), wherein the driven bevel gear (7) is fitted with a portion of the cutter blade shaft (6) above the increased-diameter portion (23) by spline fitting engagement, and a distance (R) between a lower surface of the increased-diameter portion (23) of the cutter blade shaft and an upper surface of the falling-down preventing pin (19) is set greater than an axial length (S) of the spline fitting engagement between the cutter blade shaft (6) and the driven bevel gear (7).

3. The bush cutter of claim 2, wherein the spline (24) formed on the cutter blade shaft (6) extends to the increased-diameter portion (23).

4. The bush cutter of one of claims 1 to 3, wherein the falling-down preventing pin (19) has one end portion inserted in one wall portion of the head case (1) and another end portion screwed to another wall portion of the head case (1).

## Patentansprüche

1. Gebüschschneider, worin eine Schneidklingenwelle (6) in vertikaler Orientierung in einem Schneidkopfgehäuse (1) über ein Paar von oberen und unteren Lagern (4, 5) drehbar gelagert ist, und worin Antriebskraft von einer Übertragungswelle (15) auf die Schneidklingenwelle über Antriebs- und Abtriebskegelräder (16, 7) übertragen wird,
worin die Schneidklingenwelle (6) mit einer Herunterfallverhinderungsstruktur versehen ist, die einen vertieften Abschnitt (18) verringerten Durchmessers aufweist, der in der Schneidklingenwelle (6) zwischen dem Abtriebskegelrad (7) und dem unteren Lager (5) vorgesehen ist;
**dadurch gekennzeichnet, dass** die Herunterfallverhinderungsstruktur ferner einen Herunterfallverhinderungsstift (19) aufweist, der an seinen entgegengesetzten Endabschnitten in das Kopfgehäuse (1) derart eingesetzt ist, dass er sich quer zu dem vertieften Abschnitt (18) erstreckt.

2. Der Gebüschschneider von Anspruch 1, worin die Herunterfallverhinderungsstruktur ferner einen Abschnitt vergrößerten Durchmessers (23) aufweist, der an der Schneidklingenwelle oberhalb des vertieften Abschnitts (18) vorgesehen ist, worin das Abtriebskegelrad (7) mit einem Abschnitt der Schneidklingenwelle (6) oberhalb des im Durchmesser vergrößerten Abschnitts (23) durch Längsverzahnungssitzeingriff montiert ist, und ein Abstand (R) zwischen einer Unterseite des im Durchmesser vergrößerten Abschnitts (23) der Schneidklingenwelle und einer Oberseite des Herunterfallverhinderungsstifts (19) größer eingestellt ist als eine axiale Länge (S) des Längsverzahnungssitzeingriffs zwischen der Schneidklingenwelle (6) und dem Abtriebskegelrad (7).

3. Der Gebüschschneider von Anspruch 2, worin sich die an der Schneidklingenwelle (6) ausgebildete Längsverzahnung (24) zu dem im Durchmesser vergrößerten Abschnitt (23) hin erstreckt.

4. Der Gebüschschneider nach einem der Ansprüche 1 bis 3, worin der Herunterfallverhinderungsstift (19) einen Endabschnitt, der in einen Wandabschnitt des Kopfgehäuses (1) eingesetzt ist, und einen anderen Endabschnitt, der an einen anderen Wandabschnitt des Kopfgehäuses (1) geschraubt ist, aufweist.

## Revendications

1. Débroussailleuse dans laquelle l'arbre de lame de coupe (6) est monté avec faculté de rotation dans une orientation verticale dans un boîtier de tête de coupe (1) via une paire de paliers supérieur et inférieur (4, 5) et dans laquelle une force d'entraînement est transmise d'un arbre de transmission (15) à l'arbre de lame de coupe via des pignons coniques d'entraînement et entraîné (16, 7),
dans laquelle l'arbre de lame de coupe (6) est doté d'une structure de prévention de chute comprenant une portion évidée (18) d'un diamètre réduit agencée dans l'arbre de lame de coupe (6) entre le pignon conique entraîné (7) et le palier inférieur (5) ;
**caractérisé en ce que** la structure de prévention de chute comprend en outre une cheville de prévention de chute (19) insérée dans ses portions d'extrémité opposées dans le boîtier de tête de coupe (1) de façon à s'étendre par-dessus la portion évidée (18).

2. Débroussailleuse selon la revendication 1, dans laquelle la structure de prévention de chute comprend en outre une portion de diamètre augmenté (23) agencée sur l'arbre de lame de coupe au-dessus de la portion évidée (18), dans laquelle le pignon conique entraîné (7) est ajusté avec une portion de l'arbre de lame de coupe (6) par-dessus la portion de diamètre augmenté (23) par coopération d'assemblage par cannelure, et une distance (R) entre une surface inférieure de la portion de diamètre augmenté (23) de l'arbre de lame de coupe et une surface supérieure de la cheville de prévention de chute (19) est établie supérieure à une longueur axiale (S) de coopération d'assemblage par cannelure entre l'arbre de lame de coupe (6) et le pignon conique entraîné (7).

3. Débroussailleuse selon la revendication 2, dans laquelle la cannelure (24) formée sur l'arbre de lame de coupe (6) s'étend vers la portion de diamètre augmenté (23).

4. Débroussailleuse selon l'une des revendications 1 à 3, dans laquelle la cheville de prévention de chute (19) comprend une portion d'extrémité insérée dans une portion de paroi du boîtier de tête de coupe (1) et une autre portion d'extrémité vissée à une autre portion de paroi du boîtier de lame de coupe (1).
